(19) Europäisches Patentamt / European Patent Office / Office européen des brevets

(11) **EP 3 827 049 B1**

(12) **EUROPÄISCHE PATENTSCHRIFT**

(45) Veröffentlichungstag und Bekanntmachung des Hinweises auf die Patenterteilung:
**09.04.2025 Patentblatt 2025/15**

(21) Anmeldenummer: **19745122.2**

(22) Anmeldetag: **24.07.2019**

(51) Internationale Patentklassifikation (IPC):
**C08L 23/12** (2006.01)  **C08L 91/06** (2006.01)
**C08F 10/00** (2006.01)

(52) Gemeinsame Patentklassifikation (CPC):
(C-Sets verfügbar)
**C08F 210/06; C08F 210/16; C08L 23/12;**
**C08L 23/14;** C08L 91/06; C08L 2314/06  (Forts.)

(86) Internationale Anmeldenummer:
**PCT/EP2019/069925**

(87) Internationale Veröffentlichungsnummer:
**WO 2020/020949 (30.01.2020 Gazette 2020/05)**

(54) **THERMOPLASTISCHE FORMMASSEN**

THERMOPLASTIC MOLDING COMPOUNDS

MATIÈRES À MOULER THERMOPLASTIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.07.2018 DE 102018118105**

(43) Veröffentlichungstag der Anmeldung:
**02.06.2021 Patentblatt 2021/22**

(73) Patentinhaber: **Clariant International Ltd**
**4132 Muttenz (CH)**

(72) Erfinder:
- **SCHWABE, Jeremia**
  **86150 Augsburg (DE)**
- **HAUCK, Erik**
  **66953 Pirmasens (DE)**
- **BODENDORFER, Simon**
  **82178 Puchheim (DE)**
- **BACH, Sebastijan**
  **Charlotte, 28777 (US)**
- **ROESSLE, Matthias**
  **86465 Reutern (DE)**
- **LINDNER, Torsten**
  **65824 Schwalbach am Taunus (DE)**
- **TURNER, Robert**
  **Cincinnati, Ohio 54202 (US)**
- **NEU, Christian**
  **65824 Schwalbach am Taunus (DE)**
- **MORAND, Matthias**
  **65824 Schwalbach am Taunus (DE)**
- **STIEHL, Gabriele**
  **65824 Schwalbach am Taunus (DE)**

(74) Vertreter: **Clariant Produkte (Deutschland) GmbH**
**Patent Management**
**Industriepark Höchst, G 860**
**65926 Frankfurt am Main (DE)**

(56) Entgegenhaltungen:
EP-A1- 3 271 436  WO-A1-2014/194074
US-A1- 2014 371 703  US-A1- 2017 204 306
US-A1- 2017 290 945  US-B2- 10 350 325

- **Krishnamuthy, Dynamic Mechanical Analysis of Rextac Amorphous Polyalphaolefins (APAO) and Blends with Styrene Block Copolymers, Hot Melt Symposium, 1992**
- **Norm ASTM D 1238**
- **Produktdatenblatt Vistamaxx ® 3000**
- **Produktdatenblatt Vistamaxx ® 6502**

(52) Gemeinsame Patentklassifikation (CPC): (Forts.)

C-Sets
**C08F 210/06, C08F 4/659;**
**C08F 210/16, C08F 4/659;**
**C08L 23/14, C08L 23/08;**
**C08L 23/14, C08L 23/14;**
**C08L 23/14, C08L 23/16;**

C08F 210/06, C08F 210/16, C08F 2500/03,
C08F 2500/02, C08F 2500/08, C08F 2500/17,
C08F 2500/34;
C08F 210/16, C08F 210/06, C08F 2500/03,
C08F 2500/02, C08F 2500/12, C08F 2500/17,
C08F 2500/32, C08F 2500/34;
C08L 91/06, C08L 23/16

**Beschreibung**

Die Erfindung betrifft thermoplastische Formmassen zur Verwendung in oder als Schmelzklebstoff, umfassend die Komponenten A und B, wobei die Komponente A ein oder mehrere $C_3/C_2$-Copolymere umfasst, die jeweils mit Metallocen-Katalysatoren hergestellt wurden und jeweils eine Schmelzviskosität bei 170 °C kleiner 20.000 mPas, gemessen nach DIN 53019, und ein Molekulargewicht $M_w$ von 1000 g/mol bis 50.000 g/mol aufweisen und die Komponente B ein oder mehrere $C_2/C_3$-Copolymere umfasst, die jeweils mit Metallocen-Katalysatoren hergestellt wurden und jeweils einen Schmelzindex MI von 1 bis 100 g/10min, gemessen bei 190 °C/2,16 kg, nach ASTM D 1238, und ein Molekulargewicht Mw von 50.000 g/mol bis 300.000 g/mol aufweisen, dadurch gekennzeichnet, dass Komponente A eine Bruchdehnung kleiner 1.000%, gemessen nach ISO 527, mit Ausnahme des verwendeten Prüfkörpers, besitzt, und Komponente B eine Bruchdehnung größer 1.000%, gemessen nach ISO 527, mit Ausnahme des verwendeten Prüfkörpers, welcher die folgenden Maße aufweist: Gesamtlänge: 50 mm, Breite des engen Teils: 3,3 mm, Breite an den Enden: 7 mm, Länge des engen parallelen Teils: 25 mm, Dicke: 1 mm.

Der erfindungsgemäße Schmelzklebstoff eignet sich zur Verklebung von Substraten untereinander oder zur Fixierung von Pulver oder Granulaten auf Substraten aller Art, wobei die Schmelzklebstoffe neben den erfindungsgemäßen thermoplastischen Formmassen Klebrigmacher, Weichmacher, organische oder anorganische Pigmente, Füllstoffe, Flammschutzmittel, Stabilisatoren, Antistatika, Antioxidantien und Lichtschutzmittel enthalten können.

Schmelzklebstoffe sind thermoplastische Zusammensetzungen, die bei Raumtemperatur fest sind. Wenn sie durch Erwärmen in den flüssigen oder geschmolzenen Zustand übergehen, d.h. der Schmelzklebstoff offen ist, kann der Schmelzklebstoff auf ein Substrat aufgetragen werden. Falls ein zweites Substrat auf den Schmelzklebstoff aufgebracht wird, bevor dieser wieder in den festen Zustand abgekühlt ist, kann eine adhäsive Verbindung entstehen, die die zwei Substrate verbindet. Der Schmelzkleber besitzt eine für die Anwendung optimierte offene Zeit und verklebt die Fügeteile permanent. Schmelzklebstoffe enthalten typischerweise ein kohäsives Basispolymer, einen adhäsiven Klebrigmacher und gegebenenfalls Wachse, Weichmacher (Öle) und weitere Zusätze. Typische Schmelzklebstoffe und ihre Funktion werden in US 5,026,756 beschrieben.

Als kohäsives Basispolymer werden Polymere wie z.B. Natur- und Synthesekautschuke, Polyacrylate, Polyisobutylene, Polyolefin(e), Polyester, Polychroprene, Polyvinylether, Polyurethane, Styrol-Butadien-(SBS) Styrol-Isobuten- (SIS), Styrol-Ethylen-Butadien- (SEBS) oder Styrol-Ethylen-Propylen- (SEPS) Blockcopolymere verwendet. Diese Basispolymere sorgen in der Regel für die kohäsive Wirkung des Klebstoffsystems.

Die adhäsive Wirkung von Schmelzklebstoffen wird in erster Linie vom Klebrigmacher bestimmt, der häufig ein Harz ist oder eines enthält. Diese Harze sind z.B. niedermolekulare Produkte aus dem $C_5$- oder $C_9$-Strom der Erdöl-aufbereitung, enthalten oft Aromaten und haben für gewöhnlich eine Glasübergangstemperatur, die über Raumtemperatur liegt.

Somit erhöht die Beimischung von Harzen in Schmelzklebstoffformulierungen die Glastemperaturen der Formulierungen, sodass entsprechende Schmelzklebstoffe unter verringerter Kälteflexibilität leiden und der Temperaturbereich in dem der Schmelzklebstoff verwendet werden kann, eingeschränkt ist.

Als Harze kommen auch Polyterpen-Harze, natürliche und modifizierte Kolophoniumharze, insbesondere Harzester, Glycerinester von Baumharzen, phenolmodifizierte Pentaerythritolester und phenolmodifizierte Terpen-Harze zum Einsatz. Solche Harztypen enthalten reizende/gesundheitsbedenkliche Stoffe wie Abietinsäure und können Allergien auslösen, weshalb sie für Anwendungen im Hygienebereich, für Lebensmittelverpackungen und im medizinischen Bereich fragwürdig sind.

Harze weisen üblicherweise Dichten von z.T. mehr als 1 g/cm$^3$ auf. Die Verwendung solcher Harze in Schmelzklebstoffformulierungen sorgt daher für eine Erhöhung der Dichte, insbesondere in Formulierungen mit Polyolefin als kohäsivem Basispolymer. Dadurch wird bei konstantem Applziervolumen mehr Schmelzklebstoff nach Gewicht benötigt, was sowohl einen negativen Kostenfaktor darstellt als auch ein höheres Gewicht der geklebten Substrate bedeutet.

Der Weichmacher in der Schmelzklebstoffformulierung dient der Viskositätsabsenkung der Klebstoffzusammensetzung und damit ihrer besseren Verarbeitbarkeit und Applikationsfähigkeit. In der Regel enthalten Schmelzklebstoffe Mineralöle als Weichmacher, zum Teil in bedeutender Menge.

Mineralöle sind erdölbasiert und enthalten dementsprechend paraffinische, naphtenische, aromatischen und polycyclische Verbindungen, sowie leichtflüchtige organische Verbindungen (volatile organic compounds: VOC), die zu einer erhöhten Belastung der Raumluft beitragen. Die auch als MOSH und MOAH (mineral oil saturated hydrocarbons bzw. mineral oil aromatic hydrocarbons) in Mineralölen enthaltenen Verbindungen werden wegen ihrer Neigung, in menschlichem Gewebe zu kumulieren, als toxikologisch riskant eingestuft. Mineralöle sind für gewöhnlich schlecht in Schmelzklebstoffformulierungen eingebunden und neigen deshalb zu verstärkter Migration.

Die Anwendungsmöglichkeiten von Schmelzklebstoffen sind sehr vielseitig. Sie werden insbesondere für Klebeverbindungen eingesetzt, die permanent sind. Durch den Auftrag aus der Schmelze können Schmelzkleber auf Lösungsmittel verzichten.

Die Verarbeitung von Schmelzklebstoffen, insbesondere der Auftrag, d.h. die Applikation, auf die entsprechenden Substrate kann durch diverse Verfahren realisiert werden, so z.B. durch Aufsprühen, Applizieren durch Extrusion, Auftragen mittels einer Walze, einer Raupe oder einer Schlitzdüse. Um für die diversen Applikationsverfahren optimal geeignet zu sein, muss der Schmelzkleber der Applikationsmethode angemessene rheologische Eigenschaften aufweisen.

In der Schmelzklebstofftechnologie ist die Sprühapplikation eine gängige Applikationstechnik. Beim Spinnsprühen verlässt ein Schmelzefaden eine Sprühdüse, wird gegebenenfalls durch einen Luftstrom ohne abzureißen verstreckt, und anschließend spiralförmig auf einem Substrat abgelegt. Die Applikationstemperaturen liegen je nach Material bei 150 °C bis 250 °C. Konventionelle Hotmelt-Formulierungen auf Basis von Styrol-Blockcopolymeren, aber auch Polyolefinen lassen sich bei Temperaturen von 160 °C und weniger nicht gut versprühen. Es entstehen schlechte Sprühbilder, welche das Anwendungsgebiet stark einschränken. Höhere Applikationstemperaturen sorgen für erhöhten Energieverbrauch und vorzeitiger Alterung des Klebstoffes, was zu mechanischen Einbußen führt.

In EP 0 442 045 A2 werden ausgezeichnet sprühbare Schmelzklebmassen bereitgestellt, die ein gleichmäßiges Sprühbild ergeben. Sie basieren weitgehend auf amorphen Poly-alpha-Olefinen, die nicht mit Metallocenen hergestellt sind und folgende Merkmale aufweisen: ein Erweichungspunkt zwischen 70 °C und 130 °C, eine Schmelzviskosität (bei 190 °C) zwischen 1000 mPas und 20.000 mPas, eine Nadelpenetration zwischen acht und 40 [0,1 mm] und eine Polydispersität von maximal sechs. Die erfindungsgemäßen Massen lassen sich gleichermaßen vorteilhaft durch Atomisierung als auch durch Spinnsprühen applizieren.

EP 1 631 641 beschreibt Schmelzklebstoffe, die Polyolefinwachse enthalten, wobei die Polyolefinwachse mit Hilfe von Metallocenkatalysatoren hergestellt werden und einen Tropf- oder Erweichungspunkt Ring/Kugel zwischen 80 °C und 165 °C und eine maximale Schmelzviskosität von 40000 mPas, gemessen bei einer Temperatur von 10 °C über dem Tropf- oder Erweichungspunkt, aufweisen.

Das Dokument EP 1 645 608 offenbart eine Heißschmelzzusammensetzung, umfassend Polyolefinwachse, hergestellt unter Verwendung von Metallocenkatalysatoren, mit einem Tropf- oder Erweichungspunkt Ring/Kugel zwischen 80 °C - 165 °C, mit einer Schmelzviskosität, gemessen bei 170 °C, zwischen 20 mPas - 40.000 mPas und mit einer Glasübergangstemperatur von maximal -10°C.

US 5,401,792 beschreibt sprühbare Schmelzklebstoffzusammensetzungen umfassend (A) Styrol-Block-Copolymeren, (B) klebrigmachendes Harz, und (C) EthylenCopolymer. Methoden zur Herstellung und die Verwendung besagter Zusammensetzungen werden ebenfalls offenbart.

EP 2 081 609 bezieht sich auf einen Schmelzklebstoff zum Verkleben von Fasermaterialien wie mattierten Vliesstoffen oder gewebten Textilien mit glatten Substratoberflächen, wie Kunststoff- oder Metallfolien und zum Laminieren dieser Materialien. Diese Substanz ist dadurch gekennzeichnet, dass sie mindestens ein Polyolefin enthält, das durch Polymerisation in Gegenwart eines Metallocens als Katalysator hergestellt wurde und einen Ring/Kugel-Erweichungspunkt zwischen 50 °C und 165 °C und eine Schmelzviskosität, gemessen bei einer Temperatur von 170 °C, zwischen 20 mPas und 40.000 mPas aufweist. Der Schmelzklebstoff kann mindestens eine Klebstoffkomponente enthalten und wird in einer Menge zwischen 3 g/m$^2$ und 6 g/m$^2$, vorzugsweise zwischen 4 g/m$^2$ und 5,5 g/m$^2$, zum Aufkleben einer Folie auf einen Vliesstoff bei der Herstellung von Hygieneartikeln wie Einwegwindeln, Babywindeln, Inkontinenzprodukten, Slipeinlagen und/oder Damenbinden verwendet.

EP 1 290 100 betrifft ein Verfahren zum Zerstäuben, Spiralspritzen, Oszillationsspritzen oder Schmelzblasen von Propylencopolymeren auf ein Substrat, umfassend die Auswahl eines Poly-alpha-Olefin-Interpolymers, umfassend: A) 60 bis 94 Mol-% Einheiten, die von einem alpha-Monoolefin mit 3 bis 6 Kohlenstoffatomen abgeleitet sind, und B) 6 bis 40 Mol-% Einheiten, die von Ethylen oder einem oder mehreren anderen Monoolefinen mit 4 bis 10 Kohlenstoffatomen und mindestens einem Kohlenstoffatom mehr als A) abgeleitet sind; und C) gegebenenfalls 0 bis 10 Mol-% Einheiten, die von einem anderen copolymerisierbaren ungesättigten Kohlenwasserstoff abgeleitet sind, der von A) und B) verschieden ist; i) und Mw/Mn von 6 oder weniger; ii) ein Speichermodul G' aufweist, das, wenn es beim Abkühlen bestimmt wird, bei einer Temperatur von weniger als 85 °C gemessen einen Wert von 0,3 MPa schneidet.; iii) ein Verhältnis von G"/G' von 18 oder mehr aufweist, wenn G' bei einer Frequenz von 1 Hz 10 Pa beträgt; und iv) eine Viskosität von 5.000 mPa.s oder weniger bei 190 °C, und Zerstäuben, Spiralspritzen, Oszillationsspritzen oder Schmelzblasen des Interpolymers in ein Substrat. Auch Mischungen der oben genannten Copolymere können hier eingesetzt werden.

EP 2 976 403 betrifft gebrauchsfertige Heissschmelzklebemassen, enthaltend mindestens 95 Gew.-% eines oder mehrerer Polyolefincopolymerwachse, die mit Hilfe von Metallocenkatalysatoren hergestellt wurden, dadurch gekennzeichnet, dass das Polyolefincopolymerwachs aus Propylen und einem oder mehreren weiteren Monomeren ausgewählt aus Ethylen und verzweigten oder unverzweigten 1-Alkenen mit 4 bis 20 C-Atomen besteht und der Gehalt an Struktureinheiten hervorgegangen aus Propylen in den Copolymerwachsen 80 bis 99,9 Gew.-% beträgt, und die Heissschmelzklebemasse eine Oberflächenspannung der Schmelze, gemessen bei einer Temperatur von 170 °C, von maximal 23 mN/m aufweist.

Das Dokument EP 3 271 436 offenbart einen sprühbaren Schmelzklebstoff auf Olefinbasis und absorbierende Artikel, die den Klebstoff enthalten. Der sprühbare Schmelzklebstoff auf Olefinbasis eignet sich besonders für das Sprühen bei niedrigen Auftragstemperaturen. Die sprühbaren Schmelzklebstoffe mit niedriger Auftragstemperatur zeichnen sich durch hohe Anfangsfestigkeit, hervorragende Haftfestigkeit und Alterungsbeständigkeit aus. Die sprühbaren Schmelzklebstoffe mit niedriger Auftragstemperatur ermöglichen zudem dünne Verklebungen ohne Durchblutungs- und Durchbrandrisiken für wärmeempfindliche Substrate.

WO 2014/047317 beschreibt einen Heißschmelzklebstoff und Gegenstände, die unter Verwendung des Heißschmelzklebstoffs hergestellt werden, um Strukturen in einem Gegenstand zu verbinden. Die Schmelzklebemasse wird typischerweise durch Mischen eines amorphen Polymers mit einem, einen substantiellen kristallinen Anteil aufweisenden, Heterophasenpolymer hergestellt.

EP 3 271 436 A1 beschreibt einen Schmelzklebstoff aus zwei Polyolefinen, der auf Gegenstände gesprüht werden kann.

Die im Stand der Technik beschriebenen Schmelzklebstoffe können entweder durch Extrusion, Auftragen mittels einer Walze, Raupe oder Schlitzdüse oder durch Sprühapplikation auf das Substrat aufgebracht werden. Je nach Applikationstechnik kommt ein anderer Viskositätsbereich zum Einsatz. Sprühbare Schmelzklebemassen liegen vornehmlich im niedrigen Viskositätsbereich. Die niedrige Viskosität eines sprühbaren Schmelzklebstoffs geht normalerweise mit unzureichenden mechanischen Eigenschaften einher, die die kohäsiven Eigenschaften des Materials negativ beeinflussen. Hier sind insbesondere Eigenschaften, wie die Bruchdehnung oder die Festigkeit des Materials zu nennen. Derartige, durch Sprühapplikationen verklebte Substrate, halten meist nur geringen mechanischen Belastungen stand. Sie sind dahingehend optimiert, eine möglichst homogene und dabei materialsparende Beschichtung des zu verklebenden Substrates zu gewährleisten. Hierbei steht die adhäsive Verbindung der Substrate im Vordergrund, das kohäsive Polymer soll hingegen eine ausreichende Stabilität gewährleisten, um die Klebeverbindung an sich nicht brüchig werden zu lassen. Die Elastizität der Klebeverbindung spielt dabei nur eine untergeordnete Rolle. Schmelzklebstoffe mit höherer Viskosität können zwar durch eine Erhöhung der Applikationstemperatur sprühbar gemacht werden, eine solche Temperaturerhöhung führt allerdings zu einem erhöhten Energiebedarf und kann zu einem unerwünschten thermisch-induzierten Abbau der eingesetzten Komponenten führen.

Aufgabe der Erfindung ist es, verbesserte Schmelzklebstoffe bereitzustellen, die über energie- und materialsparende Applikationstechniken auftragbar sind und trotzdem mit einer hohen mechanischen Stabilität der Klebeverbindung einhergehen und damit Anwendungsmöglichkeiten eröffnen, die erhöhte Anforderungen an die Stabilität der Verklebung stellen. Hier sind insbesondere Fasernetz-Sprühapplikationen zu nennen, die Granulate oder Pulver fixieren können, ohne den Stoffaustausch mit der Umgebung zu behindern. Da viele Schmelzkleber häufig in direktem Kontakt zum menschlichen Körper oder zu Gegenständen des täglichen Gebrauchs angewendet werden, ist es von Vorteil, wenn der Schmelzklebstoffe weder Harze noch Mineralöle enthält, damit eine verbesserte Umweltverträglichkeit und eine geringere Toxikologie aufweist und nachhaltig herstellbar ist.

Diese Aufgabe wird gelöst durch thermoplastische Formmassen mit einer Schmelzviskosität kleiner als 30.000 mPas, umfassend die Komponenten A und B, wobei die Komponente A ein oder mehrere $C_3/C_2$-Copolymere umfasst, die jeweils mit Metallocen-Katalysatoren hergestellt wurden und jeweils eine Schmelzviskosität bei 170 °C kleiner 20.000 mPas, gemessen nach DIN 53019, und ein Molekulargewicht $M_w$ von 1000 g/mol bis 50.000 g/mol aufweisen und die Komponente B ein oder mehrere $C_2/C_3$-Copolymere umfasst, die jeweils mit Metallocen-Katalysatoren hergestellt wurden und jeweils einen Schmelzindex MI von 1 bis 100 g/min, gemessen bei 190 °C/2,16 kg, nach ASTM D 1238, und ein Molekulargewicht $M_w$ von 50.000 g/mol bis 300.000 g/mol, gemessen nach ISO16014, aufweisen, dadurch gekennzeichnet, dass Komponente A eine Bruchdehnung kleiner 1.000%, gemessen nach ISO 527, mit Ausnahme des verwendeten Prüfkörpers, besitzt, und Komponente B eine Bruchdehnung größer 1.000%, gemessen nach ISO 527, mit Ausnahme des verwendeten Prüfkörpers, welcher die folgenden Maße aufweist: Gesamtlänge: 50 mm, Breite des engen Teils: 3,3 mm, Breite an den Enden: 7 mm, Länge des engen parallelen Teils: 25 mm, Dicke: 1 mm.

Die Schmelzviskosität ist nicht nur vom Molekülaufbau, sondern auch von der Temperatur und den Scherbedingungen abhängig. Demzufolge wird die Schmelzviskosität für jeweils verschiedene Temperaturen in Abhängigkeit von der Schergeschwindigkeit im Rotationsviskosimeter gemäß der DIN 53019 gemessen. Bei hohen Viskositäten ist die Viskositätsbestimmung über das Rotationsviskosimeter nicht üblich, weshalb für hochviskose Polymere der "melt index" MI angegeben wird. Dieser wird nach ASTM D 1238 bestimmt.

In einer alternativen Ausführungsform besteht die thermoplastische Formmasse aus den Komponenten A und B.

Vorzugsweise besteht die Komponente A aus einem oder mehreren $C_3/C_2$-Copolymeren, die jeweils mit Metallocen-Katalysatoren hergestellt wurden und jeweils eine Schmelzviskosität bei 170 °C kleiner 20.000 mPas, gemessen nach DIN 53019, und ein Molekulargewicht Mw von 1000 g/mol bis 50.000 g/mol aufweisen.

Vorzugsweise besteht die Komponente B aus einem oder mehreren $C_2/C_3$-Copolymeren, die jeweils mit Metallocen-Katalysatoren hergestellt wurden und jeweils einen Schmelzindex MI von 1 bis 100 g/min, gemessen bei 190 °C/2,16 kg, nach ASTM D 1238, und ein Molekulargewicht Mw von 50.000 g/mol bis 300.000 g/mol aufweisen.

Zur Herstellung der für die erfindungsgemäßen thermoplastischen Formmasse verwendeten Copolymere des Propylens können Metallocenkatalysatoren verwendet werden, die aus chiralen oder nichtchiralen Übergangsmetallverbindungen der Formel $M^1L_x$ bestehen. Die Übergangsmetallverbindung $M^1L_x$ enthält mindestens ein Metallzentralatom $M^1$, an das mindestens ein $\pi$-Ligand L, z. B. ein Cyclopentadienylligand, gebunden ist. Darüber hinaus können Substituenten, wie z. B. Halogen-, Alkyl-, Alkoxy- oder Arylgruppen an das Metallzentralatom $M^1$ gebunden sein. $M^1$ ist bevorzugt ein Element der III, IV., V. oder VI. Hauptgruppe des Periodensystems der Elemente, wie Ti, Zr oder Hf. Unter Cyclopentadienylligand sind unsubstituierte Cyclopentadienylreste und substituierte Cyclopentadienylreste wie Methylcyclopentadienyl-, Indenyl-, 2-Methylindenyl-, 2-Methyl-4-phenylindenyl-, Tetrahydroindenyl- oder Octahydrofluorenylreste zu verstehen. Die π-Liganden können verbrückt oder unverbrückt sein, wobei einfache und mehrfache Verbrückungen - auch über Ringsysteme - möglich sind. Zur Aktivierung der Einzentren-Katalysatorsysteme werden geeignete Cokatalysatoren eingesetzt, z.B. aluminiumorganische Verbindungen, insbesondere Alumoxane oder auch aluminiumfreie Systeme. Beispiele für Metallocenkatalysatoren, deren Aktivierung und Handhabung für die Polymerisation sind z.B. in EP 0384264 bzw. EP 0571882 beschrieben. Die Bezeichnung Metallocen umfasst auch Verbindungen mit mehr als einem Metallocenfragment, sogenannte mehrkernige Metallocene. Diese können beliebige Substitutionsmuster und Verbrückungsvarianten aufweisen. Die einzelnen Metallocenfragmente solcher mehrkernigen Metallocene können sowohl gleichartig als auch voneinander verschieden sein. Beispiele für solche mehrkernigen Metallocene sind z. B. beschrieben in EP 0632063.

Je nach Verfahren können auch geträgerte Einzentren-Katalysatoren zur Anwendung kommen. Bevorzugt sind Katalysatorsysteme, bei welchen die Restgehalte von Trägermaterial und Cokatalysator eine Konzentration von 100 ppm im Produkt nicht überschreiten.

In einer bevorzugten Ausführungsform liegt die Schmelzviskosität der erfindungsgemäßen thermoplastischen Formmassen gemessen nach DIN 53019 zwischen 100 - 25.000 mPas, bevorzugt zwischen 500 - 20.000 mPas, besonders bevorzugt zwischen 1.000 - 15.000 mPas, gemessen nach DIN 53019. In diesen Viskositätsbereichen lässt sich mit den Standard-Sprühverfahren ein optimales Sprühergebnis erzielen.

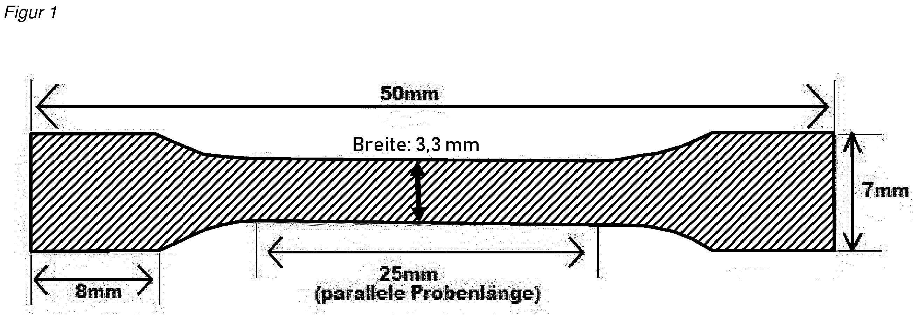

In einer weiteren bevorzugten Ausführungsform weist die thermoplastische Formmasse eine Festigkeit größer gleich 8 MPa, gemessen nach ISO 527, mit Ausnahme des verwendeten knochenförmigen Prüfkörpers (vgl. Figur 1), welcher folgende von der Vorschrift nach ISO 527 abweichende Maße aufweist: Gesamtlänge: 50 mm, Breite des engen Teils: 3,3 mm, Breite an den Enden: 7 mm, Länge des engen parallelen Teils: 25 mm, Dicke: 1 mm.

Die (Zug-)Festigkeit bei Bruch wird nach ISO 527 durch einen Zug-Dehnungsversuch ermittelt. Hier wird bestimmt, welche Kraft pro Fläche (angegeben in MPa) für den Bruch des Prüfkörpers notwendig ist.

In einer weiteren bevorzugten Ausführungsform weist die thermoplastische Formmasse eine Bruchdehnung von mehr als 1.000% auf, gemessen nach ISO 527, mit Ausnahme des verwendeten Prüfkörpers, welcher folgende von der Vorschrift nach ISO 527 abweichende Maße aufweist: Gesamtlänge: 50 mm, Breite des engen Teils: 3,3 mm, Breite an den Enden: 7 mm, Länge des engen parallelen Teils: 25 mm, Dicke: 1 mm

Die Bruchdehnung ist ein Maß für das Deformationsverhalten eines Polymers und wird nach ISO 527 durch einen Zug-Dehnungs-Versuch im gleichen Versuchslauf wie bei der Ermittlung der Festigkeit bestimmt. Der Wert für die Bruchdehnung gibt die prozentuale Verlängerung des Prüfkörpers bis zum Versagen des Materials an.

Die Komponenten A kommt in der thermoplastischen Formmasse bevorzugt in Gewichtsanteilen von 2 Gew.-% bis 98 Gew.-% vor, bezogen auf das Gesamtgewicht thermoplastischen Formmasse, stärker bevorzugt von 30 Gew.% bis 95 Gew.-%, besonders bevorzugt von 40 Gew.% bis 90 Gew.-%.

Die Komponente B kommt in der thermoplastischen Formmasse bevorzugt in Gewichtsanteilen von 2 Gew.-% bis 98 Gew.-% vor, bezogen auf das Gesamtgewicht thermoplastischen Formmasse, stärker bevorzugt von 5 Gew.% bis 70 Gew.%, besonders bevorzugt von 10 Gew.% bis 60 Gew.%. Bei diesen Gewichtsverhältnissen werden die Eigenschaften der Einzelkomponenten der entsprechenden Formmassen in optimaler Weise verbunden.

In einer bevorzugten Ausführungsform wird der Einfluss der Komponente B dahingehend verbessert, dass Komponente B ein elastomeres, semikristallines $C_3/C_2$-Copolymer mit einem Anteil von Propylen größer 80 Gew.-%, bestimmt mittels $^{13}$C-NMR, ist, wodurch die Komponente B ein für die Anwendung ausgewogenes Verhältnis von kristallinen zu amorphen Anteilen im Polymer liefert. "Semikristallin" im Sinne der Erfindung bedeutet, dass die Eigenschaften des Copolymers sowohl von den kristallinen als auch von den amorphen Bereichen des Copolymers bestimmt werden. Mit dem Kristallinitätsgrad lassen sich die thermischen und mechanischen Eigenschaften des Copolymers beeinflussen.

In einer besonders bevorzugten Ausführungsform ist die thermoplastische Formmasse dadurch gekennzeichnet, dass die Komponente B eine Schmelzenthalpie, gemessen nach ISO 11357-2, von 0 bis 50 J/g, bevorzugt von 1 bis 30 J/g, besonders bevorzugt von 2 bis 20 J/g aufweist. Die Kristallinität eines Copolymers kann quantitativ in Prozent ausgedrückt werden. Normalerweise bezieht sich eine solche Prozentangabe auf eine Referenzkristallinität. In diesem Fall ist die Referenz 100 % kristallines, isotaktisches Polypropylen-Homopolymer (Schmelzwärme des 100%-kristallinen, isotaktischen Polypropylen-Homopolymer: $\Delta H_{100\%}$ = 207 J/g). Der Kristallinitätsgrad lässt sich über die Schmelzwärme der zweiten Aufheizkurve $\Delta H_{2.Heizen}$ bestimmen, nachdem das Material nach einem ersten Aufheizen auf 180 °C mit 10 K/min auf -50°C abgekühlt wurde und anschließend mit 10 K/min ein zweites Mal aufgeheizt wurde:

$$\text{Kristallinitätsgrad } \alpha \ [\%] = \frac{\Delta H_{2.Heizen} \ [\frac{J}{g}]}{\Delta H_{100\%} \ [\frac{J}{g}]} * 100\%$$

So liegt die theoretische Schmelzwärme eines perfekt kristallinen isotaktischen Polypropylens bei 207 J/g. Damit ergibt sich für die Kristallinität eines semikristallinen random-Copolymers, welches eine Schmelzwärme von 95 J/g hat, eine Kristallinität von 46 %.

In einer weiteren bevorzugten Ausführungsform handelt es sich bei der Komponente A bevorzugt um ein statistisches Copolymer des Propylens mit einem Propylenanteil von 70 Gew.% bis 95 Gew.-%, bezogen auf das Molekulargewicht $M_W$ des Copolymers, und einem Ethylenanteil von 5 Gew.% bis 30 Gew.%, die durch die statistische Verteilung der Monomere den amorphen Charakter des Polymers der Anwendung entsprechend einstellbar macht.

In einer besonders bevorzugten Ausführungsform besitzt die Komponente A ein gewichtsmittleres Molekulargewicht von 1.000 bis 50.000 g/mol, bevorzugt 5.000 bis 30.000 g/mol und die Komponente B ein gewichtsmittleres Molekulargewicht nach ISO 16014 von 50.000 bis 300.000 g/mol, bevorzugt 70.000 bis 150.000 g/mol. Um ein Viskositätsoptimum für die Verarbeitung der thermoplastischen Formmassen zu erreichen, besitzt die Komponente A in einer bevorzugten Ausführungsform eine Schmelzviskosität bei 170 °C gemessen nach DIN 53019 von kleiner 20.000 mPas, bevorzugt 10 bis 10.000 mPas, besonders bevorzugt 100 bis 5000 mPas und Komponente B eine Schmelzviskosität bei 170 °C gemessen nach DIN 53019 von mehr als 20 Pas, bevorzugt 50 bis 10.000 Pas, besonders bevorzugt 100 bis 5000 Pas. In diesen Viskositätsbereichen können optimale Sprühergebnisse erzielt werden.

In einer bevorzugten Ausführungsform besitzt die Komponente A eine Schmelztemperatur $T_m$, ermittelt über die DSC Peaktemperatur gemäß DIN EN ISO 11357-1, zwischen 50 °C und 120 °C, bevorzugt zwischen 60 °C und 110 °C und besonders bevorzugt zwischen 70 °C und 100 °C.

In einer weiteren bevorzugten Ausführungsform besitzt die Komponente A eine Glasübergangstemperatur $T_G$ bestimmt mittels DSC, gemäß DIN EN ISO 11357-2 kleiner -10 °C, bevorzugt kleiner -15 °C und besonders bevorzugt kleiner -20 °C.

In einer weiteren bevorzugten Ausführungsform besitzt die Komponente A eine Nullscherviskosität (NsV), bestimmt gemäß DIN 53019-4, zwischen 0,01 mPas und 10.000 mPas, bevorzugt zwischen 0,1 mPas und 1.000 mPas und besonders bevorzugt zwischen 1 mPas und 850 mPas.

In einer weiteren bevorzugten Ausführungsform besitzt die Komponente A eine Dichte, bestimmt gemäß ISO 1183 kleiner 0,95 g/cm$^3$, bevorzugt kleiner 0,92 g/cm$^3$ und besonders bevorzugt kleiner 0,90 g/cm$^3$.

In einer weiteren bevorzugten Ausführungsform besitzt die Komponente A eine Polydispersitätsindex kleiner 5, bevorzugt kleiner 3, besonders bevorzugt kleiner 2,5. Der Polydispersitätsindex PDI errechnet sich aus dem Quotienten aus gewichtsmittleren Molekulargewicht $M_w$ und dem zahlenmittleren Molekulargewicht $M_n$ und wurde gemäß der Norm ISO 16014 bestimmt.

Die für die erfindungsgemäßen thermoplastischen Formmassen als Komponente A verwendeten Copolymere des Propylens können in der Formulierung sowohl die Funktion des Basispolymers übernehmen, als auch die Funktionen von Weich- und Klebrigmacher ersetzen. Dadurch ergeben sich weitere Vorteile für den Anwender. Er muss beispielsweise weniger Komponenten schmelzen und mischen, was zu schnelleren und kostengünstigeren Arbeitsprozessen führt. Außerdem lassen sich rein Polyolefin- basierte Schmelzklebemassen darstellen.

Der Einsatz von Copolymeren des Propylens aus Komponente A in der erfindungsgemäßen thermoplastischen Formmasse als Klebrigmacher, anstelle von Harzen und Weichmachern, sorgt für eine verbesserte Einbindung dieser in die Polyolefinmatrix, was zu verringerter Migration (kein "Durchbluten") und verringerter Bildung von VOCs führt.

Die Komponente A weist eine Bruchdehnung, gemessen nach ISO 527 kleiner 1.000% und Komponente B gemessen nach ISO 527, größer 1.000% auf.

Weiterhin betrifft die Erfindung einen Schmelzklebstoff der aus der erfindungsgemäßen thermoplastischen Formmasse besteht oder diese neben weiteren Komponenten enthält.

Die erfindungsgemäße thermoplastische Formmasse kann als Zusatz Klebrigmacher, insbesondere Harze, oder Weichmacher enthalten.

In einer besonders bevorzugten Ausführungsform wird der Schmelzklebstoff ohne Zusatz von Klebrigmacher oder Weichmacher hergestellt, weshalb diese Ausführungsform besonders umweltverträglich und toxikologisch unbedenklich ist und sich damit für den Einsatz am menschlichen Körper eignet.

Harz- und mineralölfrei im Sinne der Erfindung bedeutet, dass der Harz- bzw. Mineralölanteil jeweils unter 1 Gew.-%, bezogen auf die erfindungsgemäße Haftklebemasse liegt.

Der erfindungsgemäße Schmelzklebstoff kann neben der erfindungsgemäßen thermoplastischen Formmasse organische oder anorganische Pigmente, Füllstoffe, Flammschutzmittel, Stabilisatoren, Antistatika, Antioxidantien und Lichtschutzmittel enthalten.

Außerdem betrifft die Erfindung ein Verfahren zur Herstellung der erfindungsgemäßen thermoplastischen Formmasse durch Vermischung der Komponenten A und B, wobei die Komponente A ein oder mehrere $C_3/C_2$-Copolymere umfasst, die jeweils mit Metallocen-Katalysatoren hergestellt wurden und jeweils eine Schmelzviskosität bei 170 °C kleiner 20.000 mPas, gemessen nach DIN 53019, und ein Molekulargewicht Mw von 1000 g/mol bis 50.000 g/mol aufweisen und die Komponente B ein oder mehrere $C_2/C_3$-Copolymere umfasst, die jeweils mit Metallocen-Katalysatoren hergestellt wurden und jeweils einen Schmelzindex MI von 1 bis 100 g/10min, gemessen bei 190 °C/2,16 kg, nach ASTM D 1238, und ein Molekulargewicht $M_w$ von 50.000 g/mol bis 300.000 g/mol aufweisen.

Das erfindungsgemäße Verfahren umfasst das Vermischen der Komponenten A und B, insbesondere mittels eines gleichläufigen Doppelschneckenextruders bei einer Verarbeitungstemperatur zwischen 150 °C und 200 °C.

Weiterhin betrifft die Erfindung die Verwendung der erfindungsgemäßen thermoplastischen Formmasse bzw. des erfindungsgemäßen Schmelzklebstoffs zum Verbinden von flexiblen und/oder starren Substraten aller Art.

Die erfindungsgemäßen Schmelzklebstoff bzw. thermoplastischen Formmassen eignen sich zum Verbinden von flexiblen und/oder starren Substraten aller Art, wie z.B. Papier, Kartonagen, Glas, Holz, PP, PE, ABS, insbesondere für strukturierte Substrate oder textile Substrate, wie z.B. Vliese, gewebte oder nicht-gewebte Textilien ("woven" oder "non-woven"). Der Fachmann versteht unter strukturierten Substraten, solche mit einer Profiltiefe Pt von größer 1 mm.

Besonders bevorzugt dient der erfindungsgemäße Schmelzklebstoff bzw. die erfindungsgemäße thermoplastische Formmasse der Verbindung und Fixierung von grobkörnigen Schüttgütern, wie z.B. Granulaten. Für diese Anwendungen sind die verbesserten Schmelzklebstoffe so applizierbar, dass sie keinen kompakten, homogenen Film bilden, sondern eine netzartige, luft- und feuchtigkeitsdurchlässige Struktur ausbilden. Diese netzartigen luft- und feuchtigkeitsdurchlässigen Strukturen eigenen sich insbesondere, um zum Beispiel dazu Absorber auf Substraten aller Art zu fixieren. Durch diese Art der Fixierung können insbesondere Füllmaterialien, Trockenmittel oder Feuchtigkeitsabsorber zum Beispiel in Hygieneartikeln, Verpackungsmaterialien, Fahrzeugkarosserien, Möbeln, Polstermöbeln oder Matrazen sowie auf Oberflächen aller Art fixiert werden, in denen das fixierte Absorbens einer gewissen mechanischen Belastung standhalten muss.

Thermoplastische Formmassen mit den beschriebenen Merkmalen verbinden völlig überraschend eine gute Verarbeitbarkeit der Formmasse, bewirkt durch die niedrige Viskosität derselben, mit hervorragenden mechanischen Eigenschaften, die sich sonst nur durch Formmassen mit höheren Viskosität realisieren lassen. Diese Kombinationen der beschriebenen Eigenschaften qualifizieren die erfindungsgemäßen Formmassen für ihren Einsatz als Hochleistungsschmelzkleber.

**Messmethoden:**

Die aufgeführten Polyolefine wurden analog den aufgeführten Normen charakterisiert. Von der Norm abweichende Charakterisierungen erfolgten gemäß der Beschreibung.

Die Bestimmung der gewichtsmittleren Molekulargewichte $M_w$ der Copolymere wurde in 1,3-ortho-Dichlorbenzol durchgeführt und mit einer PP-Kalibrierung bestimmt. Die Messung erfolgte gelpermeationschromatographisch bei einer Temperatur von 135°C. Die Bestimmung erfolgte gemäß ISO 16014-1.

Die Bestimmung der Schmelzviskosität erfolgte gemäß der Norm DIN 53019.

Der Polydispersitätsindex PDI errechnet sich aus dem Quotienten aus gewichtsmittleren Molekulargewicht Mw und dem zahlenmittleren Molekulargewicht Mn und wurde gemäß der Norm ISO 16014-1 bestimmt.

Die mechanischen Eigenschaften (Festigkeit, Bruchdehnung) der Polyolefine und der Schmelzklebemassen wurden nach ISO 527 bestimmt, mit der Ausnahme, dass jeweils ein nicht-normgemäßer Prüfkörper verwendet wurde, der durch Schmelzpressen erzeugt wurde und der sich von dem Prüfkörper gemäß Norm durch seine Maße unterscheidet. Die zur Messung von Festigkeit und Bruchdehnung verwendeten Prüfkörper weisen folgende Maße auf: Gesamtlänge: 50 mm, Breite des engen Teils: 3,3 mm, Breite an den Enden: 7 mm, Länge des engen parallelen Teils: 25 mm, Dicke: 1 mm.

Die Bruchdehnung entspricht der Zug-Festigkeit bei Bruch und wird nach ISO 527 durch einen Zug-Dehnungsversuch ermittelt. Hier wird bestimmt, welche Kraft pro Fläche (angegeben in MPa) für den Bruch des Prüfkörpers notwendig ist. Die Zugprüfung erfolgte mit Ausnahme des Prüfkörpers nach Norm ISO 527.

Figur 1: Schematische Darstellung des bei der Ermittlung der Bruchdehnung verwendeten Prüfkörpers.

Figur 2: Schematische Darstellung des statischen Schältests.

**Beispiele**

Zur Herstellung der erfindungsgemäßen Formmassen wurden die Polymere 1 und 2 als Komponente A und die Polymere 3 und 4 als Komponente B verwendet. Die Komponenten A und B werden jeweils in den Tabellen 1 und 2 näher charakterisiert.

Komponente A

*Tabelle 1*

|  | Polyolefin A1 | Polyolefin A2 |
|---|---|---|
| Schmelzviskosität @ 170°C [mPas] (DIN 53019) | 200 | 2200 |
| Gewichtsmittleres Molekulargewicht $M_w$ [g/mol] (ISO 16014) | 8.700 | 17.800 |
| PDI (ISO 16014) | 1,5 | 2,1 |
| Glasübergangstemperatur $T_G$ [°C] (DIN EN ISO 11357-2:2016) | -30 | -25 |
| Dichte (ISO 1183) [g/cm$^3$] | 0,87 | 0,884 |
| Schmelztemperatur $T_m$ [°C] (DIN EN ISO 11357-1:2016) | 77 | 95 |
| Schmelzwärme $\Delta H_m$ [J/g] (DIN EN ISO 11357-1:2016) | 36 | 37 |
| Bruchdehnung [%] (ISO 527) | 10 | 600 |
| Festigkeit [MPa] (ISO 527) | 2 | 9.0 |

Die Komponenten aus der Tabelle 1 sind kommerzielle Copolymere erhältlich unter dem Handelsnamen Licocene® 1302 und Licocene® 2502.

Komnonente B

*Tabelle 2*

|  | Polyolefin B1 | Polyolefin B2 |
|---|---|---|
| MI [g/10 min] (190°C/2.15 kg, ASTM D1238) | 21 | 8 |
| Gewichtsmittleres Molekulargewicht $M_w$ [g/mol] (ISO 16014) | 80.300 | 128.400 |
| PDI (ISO 16014) | 2,5 | 2,5 |
| Schmelztemperatur $T_m$ [°C] (DIN EN ISO 11357-1:2016) | 95 | 60 |
| Schmelzwärme $\Delta H_m$ [J/g] (DIN EN ISO 11357-1:2016) | 12 | 17,7 |
| Bruchdehnung [%] (ISO 527) | 1.356 | 1.100 |
| Festigkeit [MPa] (ISO 527) | 17.7 | 29.5 |

Die Komponenten aus der Tabelle 2 sind kommerzielle Copolymere erhältlich unter dem Handelsnamen Vistamaxx®3000 und Vistamaxx®6502.

Die in den Tabellen 1 und 2 beschriebenen Polyolefine wurden Schmelzmischungen der Komponenten durch Schmelzextrusion hergestellt. Dafür wurde ein gleichläufiger Doppelschneckenextruder mit einer Drehzahl von 130 rpm und einer Verarbeitungstemperatur von 180 °C verwendet. Der Durchsatz der Extrusion lag bei 7 kg/h.

Die Vergleichsbeispiele zeigen Mischungen gemäß dem Stand-der-Technik, die neben einem Poly-alpha-Olefine als weitere Komponente ein SEBS-Blockcopolymer Kraton® MD 1648 einsetzen oder aber ein Harz.

Von den so hergestellten Schmelzklebemassen wurden die folgenden Eigenschaften bestimmt:

- die Schmelzviskosität bei 170 °C,
- die Zugfestigkeit in MPa,
- die Bruchdehnung in [%].

Außerdem wurden thermoplastischen Formmassen bzw. Schmelzklebstoffe in ihrer Eignung für die bestimmungsgemäße Anwendung getestet: Hierfür wurden zwei flexible Substrate mit den Dimensionen 5 cm x 30 cm durch Sprühapplikation mit der Schmelzklebemasse beschichtet und miteinander verbunden. Das Auftragsgewicht sollte zwischen 3 bis 5 g/m$^2$ liegen. Sofern die getesteten thermoplastischen Formmassen bzw. Schmelzklebstoffe sprühbar waren, wurde der im Folgenden beschriebene statische Schältest durchgeführt:

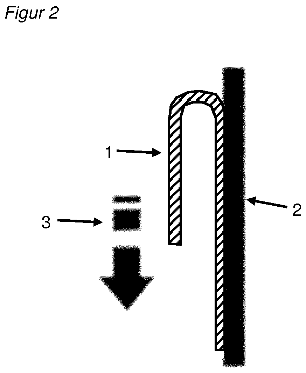

Von dem gebildeten Verbund (Testkörper) wurde die Verbundstärke ermittelt, indem ein Testkörper in einem statischen Schältest bei Raumtemperatur geprüft wird. Hierbei wird der Testkörper an einer Schmalseite aufgetrennt; so dass zwei Laschen entstehen an denen die Substrate befestigt werden können (siehe Figur 2). Einer dieser so genannten Anfasser wird an einer Haltevorrichtung befestigt, während an dem anderen Anfasser ein Gewicht von 100 g befestigt wird.

Die Messung startet mit Entlastung des Gewichtes in Zugrichtung (3), dadurch wird ein Fügepartner (1) mit einem Schälwinkel von 180° vom andern Substrat (2) abgetrennt. Nun wird die Zeit erfasst, die vom Entlasten des Gewichtes bis zur vollständigen Delamination verstreicht. Der Test wird 5 Mal wiederholt und die mittlere Zeit als Kenngröße notiert. Je länger die verstrichene Zeit, desto besser die Verbundstärke. Bei einem non-woven als Substrat kann eine mittlere Laufzeit von mehr als 250 Sekunden als gutes Ergebnis betrachtet werden. Es handelt sich um einen vergleichenden Test, dessen Resultat je nach Beschaffenheit der Substrate stark variieren kann.

**Anwendungsbeispiele (erfindungsgemäß) / (Einsatzmengen in Gew.-%)**

Tabelle 3

| | Bsp. 1 | Bsp. 2 | Bsp. 3 | Bsp. 4 | Bsp. 5 | Bsp. 6 | Bsp. 7 |
|---|---|---|---|---|---|---|---|
| Polyolefin A1 | | | 50 | 23 | 20 | | |
| Polyolefin A2 | 50 | 70 | | 58 | 50 | 85 | 95 |
| | | | | | | | |
| Polyolefin B1 | 50 | 30 | 50 | 19 | | | 5 |
| Polyolefin (IIb) B2 | | | | | 30 | 15 | |
| | | | | | | | |
| Schmelzviskosität@170°C [mPa·s] | 23.638 | 12.535 | 10.425 | 6.314 | 7.470 | 9.230 | 3.025 |
| Zug-Festigkeit [N/mm$^2$] | 12,3 | 11,0 | 8,8 | 9,3 | 8,3 | 11,2 | 9,8 |
| Bruchdehnung [%] | 1.470 | 1.250 | 1.497 | 1.290 | 1.210 | 1.298 | 1091 |
| static peel hang-time test (sec) | > 300 | > 300 | >300 | > 300 | > 300 | > 300 | > 300 |

**Vergleichsbeispiele (nicht erfindungsgemäß) / (Einsatzmengen in Gew.-%)**

Tabelle 4

| | V1 | V2 | V3 | V4 | V5 |
|---|---|---|---|---|---|
| Polyolefin A1 | | 60 | | 8 | |
| Polyolefin A2 | 50 | | 60 | 32 | |
| Polyolefin B2 | | | | 20 | |
| Kraton MD 1648 | 50 | 40 | 40 | 40 | 100 |
| | | | | | |
| Viskosität@170°C [mPa·s] | 70.000 | 12.000 | 13.250 | 32.900 | 400.000 |
| Festigkeit [N/mm$^2$] | 6,05 | 1,7 | 6,6 | 3,2 | 8.1 |
| Bruchdehnung [%] | 815 | 344 | 850 | 426 | 673 |
| static peel hang-time test (sec) | nicht anwendbar, da nicht sprühbar | 40 sec | 90 sec | nicht anwendbar, da nicht sprühbar | nicht anwendbar, da nicht sprühbar |

Kraton® MD 1648 aus Tabelle 4 ist ein Styrol-Blockcopolymer (SEBS) des Herstellers Kraton.

Die erfindungsgemäßen Beispiele zeigen im Vergleich zu den Vergleichsbeispielen beim statischen Schältest deutlich bessere Werte, sofern der Schmelzklebeformulierung versprüht werden konnte. Vergleichsformulierung die zwar gute mechanische Eigenschaften aufwiesen aber nicht versprühbar sind, konnte die erfindungsgemäße Aufgabe einer besseren Verarbeitbarkeit nicht lösen. Nur die erfindungsgemäßen Beispiele weisen sowohl eine ausreichende Viskosität, Festigkeit und Bruchdehnung auf, um für die Realisierung von Fasernetz-Sprühapplikationen geeignet zu sein. Die Vergleichsformulierungen versagen in mindestens einer der erwähnten Eigenschaften (Viskosität, Festigkeit, Bruchfestigkeit) und sind somit für eine Applikation für Fasernetz-Anwendungen ungeeignet.

## Patentansprüche

1. Thermoplastische Formmasse, umfassend die Komponenten A und B, wobei die thermoplastische Formmasse eine Schmelzviskosität bei 170°C kleiner 30.000 mPas aufweist, **dadurch gekennzeichnet, dass**

   - die Komponente A ein oder mehrere $C_3/C_2$-Copolymere umfasst, die jeweils mit Metallocen-Katalysatoren hergestellt wurden und eine Schmelzviskosität bei 170 °C kleiner 20.000 mPas, gemessen nach DIN 53019, und ein Molekulargewicht Mw von 1000 g/mol bis 50.000 g/mol aufweisen und
   - die Komponente B ein oder mehrere $C_2/C_3$-Copolymere umfasst, die jeweils mit Metallocen-Katalysatoren hergestellt wurden und einen Schmelzindex MI von 1 bis 100 g/10min, gemessen bei 190 °C/2,16 kg, nach ASTM D 1238, und ein Molekulargewicht $M_w$ von 50.000 g/mol bis 300.000 g/mol aufweisen.

   **dadurch gekennzeichnet, dass** Komponente A eine Bruchdehnung kleiner 1.000%, gemessen nach ISO 527, mit Ausnahme des verwendeten Prüfkörpers, besitzt, und Komponente B eine Bruchdehnung größer 1.000%, gemessen nach ISO 527, mit Ausnahme des verwendeten Prüfkörpers, welcher die folgenden Maße aufweist: Gesamtlänge: 50 mm, Breite des engen Teils: 3,3 mm, Breite an den Enden: 7 mm, Länge des engen parallelen Teils: 25 mm, Dicke: 1 mm.

2. Thermoplastische Formmasse nach Anspruch 1, **dadurch gekennzeichnet, dass** die thermoplastische Formmasse eine Schmelzviskosität bei 170 °C von 100 bis 25.000 mPas, bevorzugt 500 bis 20.000 mPas, besonders bevorzugt 1.000 bis 15.000 mPas gemessen nach DIN 53019 aufweist.

3. Thermoplastische Formmasse nach einem der vorhergehenden Ansprüche, **dadurch gekennzeichnet, dass** die thermoplastische Formmasse eine Festigkeit größer gleich 8 MPa aufweist, gemessen nach ISO 527 mit der Ausnahme, dass ein nicht-normgemäßer Prüfkörper verwendet wurde, der durch Schmelzpressen erzeugt wurde und der sich von dem Prüfkörper gemäß Norm durch seine Maße unterscheidet. Die verwendeten Prüfkörper weisen folgende Maße auf: Gesamtlänge: 50 mm, Breite des engen Teils: 3,3 mm, Breite an den Enden: 7 mm, Länge des engen parallelen Teils: 25 mm, Dicke: 1 mm.

4. Thermoplastische Formmasse nach einem der vorhergehenden Ansprüche, **dadurch gekennzeichnet, dass** die thermoplastische Formmasse eine Bruchdehnung von mehr als 1.000% aufweist, gemessen nach ISO 527, mit Ausnahme des verwendeten Prüfkörpers, welcher folgende von der Vorschrift abweichende Maße aufweist: Gesamtlänge: 50 mm, Breite des engen Teils: 3,3 mm, Breite an den Enden: 7 mm, Länge des engen parallelen Teils: 25 mm, Dicke: 1 mm.

5. Thermoplastische Formmasse nach einem der vorhergehenden Ansprüche, **dadurch gekennzeichnet, dass** sie 2 Gew.-% bis 98 Gew.-%, bevorzugt 30 Gew.-% bis 95 Gew.-%, besonders bevorzugt 40 Gew.-% bis 90 Gew.-% bezogen auf das Gesamtgewicht der thermoplastischen Formmasse, der Komponente A und 2 Gew.-% bis 98 Gew.-%, bevorzugt 5 Gew.-% bis 70 Gew.-%, bevorzugt 10 Gew.-% bis 60 Gew.-%, bezogen auf das Gesamtgewicht der thermoplastischen Formmasse, der Komponente B enthält.

6. Thermoplastische Formmasse nach einem der vorhergehenden Ansprüche **dadurch gekennzeichnet, dass** Komponente B ein elastomeres, semikristallines $C_3/C_2$-Copolymer ist, das mit einem Anteil von Propylen größer 80 Gew.-% aufweist.

7. Thermoplastische Formmasse nach einem der vorhergehenden Ansprüche **dadurch gekennzeichnet, dass** die Komponente A ein statistisches Copolymer des Propylens ist, welches aus 70 bis 95 Gew.-% Propylen und aus 5 bis 30 Gew.-% Ethylen hervorgegangen ist.

8. Thermoplastische Formmasse nach einem der vorhergehenden Ansprüche **dadurch gekennzeichnet, dass** die Komponente B eine Schmelzenthalpie, gemessen nach ISO 11357-2, von 0 bis 50 J/g, bevorzugt von 1 J/g bis 30 J/g, besonders bevorzugt von 2 J/g bis 20 J/g aufweist.

9. Thermoplastische Formmasse nach einem der vorhergehenden Ansprüche **gekennzeichnet dadurch, dass** die Komponente A ein gewichtsmittleres Molekulargewicht nach ISO 16014 von 1000 bis 50.000 g/mol, bevorzugt 5000 bis 30.000 g/mol aufweist und Komponente B ein gewichtsmittleres Molekulargewicht nach ISO 16014 von 50.000 bis 300.000 g/mol, bevorzugt 70.000 bis 150.000 g/mol aufweist.

10. Thermoplastische Formmasse nach einem der vorhergehenden Ansprüche **dadurch gekennzeichnet, dass** die Komponente A eine Schmelzviskosität bei 170 °C gemessen nach DIN 53019 von 10 bis 10.000 mPas, bevorzugt 100 bis 5.000 mPas aufweist und Komponente B einen Schmelzindex bei 190°C/2,16kg, gemessen nach ASTM D1238 zwischen 1 g/10min und 50 g/10min, bevorzugt zwischen 1 g/10min und 30 g/10min aufweist.

11. Schmelzklebstoff enthaltend eine thermoplastischen Formmasse gemäß einem der Ansprüche 1 bis 10.

12. Schmelzklebstoff nach Anspruch 11, **dadurch gekennzeichnet, dass** er keine Klebrigmacher oder Weichmacher enthält.

13. Schmelzklebstoff nach Anspruch 11 oder 12, **dadurch gekennzeichnet, dass** dieser organische oder anorganische Pigmente, Füllstoffe, Flammschutzmittel, Stabilisatoren, Antistatika, Antioxidantien und Lichtschutzmittel enthält.

14. Verfahren zur Herstellung einer thermoplastischen Formmasse nach einem der Ansprüche 1 bis 10, durch Vermischen der Komponenten A und B.

15. Verwendung der thermoplastischen Formmasse gemäß einem der Ansprüche 1-10 oder des Schmelzklebstoffs gemäß einem der Ansprüche 11 -13 zum Verbinden oder Fixieren von Substraten.

16. Verwendung der thermoplastischen Formmasse oder des Schmelzklebstoffs gemäß Anspruch 15, wobei das Verbinden in einem Fixieren von Füllmaterialien oder granularen oder pulverförmigen Materialien auf strukturierten oder textilen Substraten besteht.

**Claims**

1. Thermoplastic molding material comprising components A and B, the thermoplastic molding composition having a melt viscosity at 170°C of less than 30,000 mPas, **characterized in that**

   component A comprises one or more $C_3/C_2$ copolymers which have each been prepared using metallocene catalysts and have a melt viscosity at 170°C of less than 20,000 mPas, measured in accordance with DIN 53019, and a molecular weight Mw of from 1000 g/mol to 50,000 g/mol, and

      - component B comprises one or more $C_2/C_3$ copolymers, each of which has been produced using metallocene catalysts and has a melt flow index MI of 1 to 100 g/10 min, measured at 190°C/2.16 kg, 0°C/2.16 kg, according to ASTM D 1238, and a molecular weight $M_w$ of 50,000 g/mol to 300,000 g/mol, measured according to ISO 16014.

   **characterized in that** component A has an elongation at break of less than 1000%, measured according to ISO 527, with the exception of the test specimen used, and component B has an elongation at break of greater than 1000%, measured according to ISO 527, with the exception the test piece used, which has the following dimensions: total length: 50 mm, width of narrow part: 3.3 mm, width at the ends: 7 mm, length of narrow parallel part: 25 mm, thickness: 1 mm.

2. Thermoplastic molding material as claimed in claim 1, **characterized in that** the thermoplastic molding material has a melt viscosity at 170°C of 100 to 25,000 mPas, preferably 500 to 20,000 mPas, particularly preferably 1000 to 15,000 mPas, measured according to DIN 53019.

3. Thermoplastic molding material as claimed in any one of the preceding claims, **characterized in that** the thermoplastic molding composition has a strength greater than or equal to 8 MPa, measured according to ISO 527 with the exception that a non-standard test specimen was used which was produced by melt pressing and which differs from the standard test specimen in its dimensions. The test specimens used have the following dimensions: total length: 50 mm, width of the narrow part: 3.3 mm, width at the ends: 7 mm, length of the narrow parallel part: 25 mm, thickness: 1 mm.

4. Thermoplastic molding material as claimed in any one of the preceding claims, **characterized in that** the thermoplastic molding material has an elongation at break of more than 1000%, measured according to ISO 527, with the exception of the test piece used, which has the following dimensions deviating from the standard: total length: 50 mm, width of narrow part: 3.3 mm, width at the ends: 7 mm, length of narrow parallel part: 25 mm, thickness: 1 mm.

5. Thermoplastic molding material as claimed in any one of the preceding claims, **characterized in that** it comprises 2% by weight to 98% by weight, preferably 30% by weight to 95% by weight, particularly preferably 40% by weight to 90% by weight, based on the total weight of the thermoplastic molding material, of component A and 2% by weight to 98% by weight, preferably 5% by weight to 70% by weight, preferably 10% by weight to 60% by weight, based on the total weight of the thermoplastic molding material, of component B.

6. Thermoplastic molding material as claimed in any one of the preceding claims, **characterized in that** component B is an elastomeric, semicrystalline $C_3/C_2$ copolymer which has a proportion of propylene greater than 80% by weight.

7. Thermoplastic molding material as claimed in any one of the preceding claims, **characterized in that** component A is a random copolymer of propylene which has been produced from 70 to 95% by weight of propylene and from 5 to 30% by weight of ethylene.

8. Thermoplastic molding material as claimed in any one of the preceding claims, **characterized in that** component B has a melt enthalpy, measured according to ISO 11357-2, of from 0 to 50 J/g, preferably from 1 J/g to 30 J/g, particularly preferably from 2 J/g to 20 J/g.

9. Thermoplastic molding material as claimed in any of the preceding claims, **characterized in that** component A has a weight-average molecular weight according to ISO 16014 of from 1000 to 50,000 g/mol, preferably from 5000 to 30,000 g/mol and component B has a weight-average molecular weight according to ISO 16014 of from 50,000 to 300,000 g/mol, preferably from 70,000 to 150,000 g/mol.

10. Thermoplastic molding material as claimed in any one of the preceding claims, **characterized in that** component A has a melt viscosity at 170°C, measured according to DIN 53019, of from 10 to 10,000 mPas, preferably from 100 to 5000 mPas, Pas and component B has a melt flow index at 190°C/2,16 kg, measured according to ASTM D1238, between 1 g/10 min and 50 g/10 min, preferably between 1 g/10 min and 30 g/10 min.

11. Hot melt adhesive comprising a thermoplastic molding composition as claimed in any one of claims 1 to 10.

12. Hot melt adhesive according to claim 11, **characterized in that** it contains no tackifiers or plasticizers.

13. Hot melt adhesive according to claim 11 or 12, **characterized in that** it contains organic or inorganic pigments, fillers, flame retardants, stabilizers, antistats, antioxidants and light stabilizers.

14. Process for preparing a thermoplastic molding material as claimed in any one of claims 1 to 10 by mixing components A and B.

15. Use of the thermoplastic molding material as claimed in any one of claims 1-10 or of the hot-melt adhesive according to any one of claims 11-13 for joining or fixing substrates.

16. Use of the thermoplastic molding material or of the hot-melt adhesive according to claim 15, wherein the bonding consists in fixing filling materials or granular or pulverulent materials on structured or textile substrates.

**Revendications**

1. Masse à mouler thermoplastique, comprenant les composants A et B, la masse à mouler thermoplastique présentant une viscosité à l'état fondu à 170°C inférieure à 30.000 mPas, **caractérisée en ce que**

- le composant A comprend un ou plusieurs copolymères C3/C2 qui ont été préparés chacun avec des catalyseurs métallocènes et qui présentent une viscosité à l'état fondu à 170°C inférieure à 20 000 mPas, mesurée selon la norme DIN 53019, et un poids moléculaire Mw de 1000 g/mol à 50 000 g/mol, et
- le composant B comprend un ou plusieurs copolymères C2/C3, qui ont été préparés chacun avec des catalyseurs métallocènes et qui présentent un indice de fusion MI de 1 à 100 g/10 min, mesuré à 190 °C/2,16 kg, selon ASTM D 1238, et un poids moléculaire $M_w$ de 50 000 g/mol à 300 000 g/mol, mesuré selon ISO16014.

**caractérisé en ce que** le composant A possède un allongement à la rupture inférieur à 1000%, mesuré selon ISO 527, à l'exception de l'éprouvette utilisée, et le composant B possède un allongement à la rupture supérieur à 1000%, mesuré selon ISO 527, à l'exception de l'éprouvette utilisée, qui présente les dimensions suivantes : longueur totale : 50 mm, largeur de la partie étroite : 3,3 mm, largeur aux extrémités : 7 mm, longueur de la partie étroite parallèle : 25 mm, épaisseur : 1 mm.

2. Masse à mouler thermoplastique selon la revendication 1, **caractérisée en ce que** la masse à mouler thermoplastique présente une viscosité à l'état fondu à 170 °C de 100 à 25 000 mPas, de préférence de 500 à 20 000 mPas, de manière particulièrement préférée de 1 000 à 15 000 mPas, mesurée selon DIN 53019.

3. Masse à mouler thermoplastique selon l'une des revendications précédentes, **caractérisée en ce que** la masse à mouler thermoplastique présente une résistance supérieure ou égale à 8 MPa, mesurée selon la norme ISO 527, à l'exception du fait que l'on a utilisé une éprouvette non conforme à la norme, qui a été produite par pressage à chaud et qui se distingue de l'éprouvette selon la norme par ses dimensions. Les dimensions des éléments de frappe utilisés sont les suivantes: Longueur totale : 50 mm, largeur de la partie étroite : 3,3 mm, largeur aux extrémités : 7 mm, longueur de la partie étroite et parallèle : 25 mm, épaisseur : 1 mm.

4. Masse à mouler thermoplastique selon l'une des revendications précédentes, **caractérisée en ce que** la masse à mouler thermoplastique présente un allongement à la rupture supérieur à 1000%, mesuré selon la norme ISO 527, à l'exception de l'éprouvette utilisée, qui présente les dimensions suivantes, différentes de celles prescrites : longueur totale : 50 mm, largeur de la partie étroite : 3,3 mm, largeur aux extrémités : 7 mm, longueur de la partie parallèle étroite : 25 mm, épaisseur : 1 mm.

5. Masse à mouler thermoplastique selon l'une des revendications précédentes, **caractérisée en ce qu'**elle contient de 2 % à 98 % en poids, de préférence de 30 % à 95 % en poids, de manière particulièrement préférée de 40 % à 90 % en poids par rapport au poids total de la masse à mouler thermoplastique, du composant A et 2 % en poids à 98 % en poids, de préférence 5 % en poids à 70 % en poids, de préférence 10 % en poids à 60 % en poids, par rapport au poids total de la masse à mouler thermoplastique, du composant B.

6. Masse à mouler thermoplastique selon l'une des revendications précédentes, **caractérisée en ce que** le composant B est un copolymère élastomère semi-cristallin en C3/C2, qui présente une proportion de propylène supérieure à 80 % en poids.

7. Masse à mouler thermoplastique selon l'une des revendications précédentes, **caractérisée en ce que** le composant A est un copolymère statistique du propylène, qui est issu de 70 à 95 % en poids de propylène et de 5 à 30 % en poids d'éthylène.

8. Masse à mouler thermoplastique selon l'une des revendications précédentes, **caractérisée en ce que** le composant B présente une enthalpie de fusion, mesurée selon ISO 11357-2, de 0 à 50 J/g, de préférence de 1 J/g à 30 J/g, de manière particulièrement préférée de 2 J/g à 20 J/g.

9. Masse à mouler thermoplastique selon l'une des revendications précédentes, **caractérisée en ce que** le composant A présente une masse moléculaire moyenne en poids selon ISO 16014 de 1000 à 50 000 g/mol, de préférence de 5000 à 30 000 g/mol, et le composant B présente une masse moléculaire moyenne en poids selon ISO 16014 de 50 000 à 300 000 g/mol, de préférence de 70 000 à 150 000 g/mol.

10. Masse à mouler thermoplastique selon l'une des revendications précédentes, **caractérisée en ce que** le composant A présente une viscosité à l'état fondu à 170 °C, mesurée selon la norme DIN 53019, de 10 à 10 000 mPas, de préférence de 100 à 5 000 mPas, et le composant B présente un indice de fusion à 190 °C/2,16 kg, mesuré selon la norme ASTM D1238, compris entre 1 g/10 min et 50 g/10 min, de préférence entre 1 g/10 min et 30 g/10 min.

11. Adhésif thermofusible contenant une masse à mouler thermoplastique selon l'une des revendications 1 à 10.

12. Adhésif thermofusible selon la revendication 11, **caractérisée en ce qu'**elle ne contient pas d'agents collants ou de plastifiants.

13. Adhésif thermofusible selon la revendication 11 ou 12, **caractérisée en ce qu'**elle contient des pigments organiques ou inorganiques, des charges, des agents ignifuges, des stabilisants, des antistatiques, des antioxydants et des photoprotecteurs.

14. Procédé de préparation d'une masse à mouler thermoplastique selon l'une des revendications 1 à 10, par mélange des composants A et B.

15. Utilisation de la masse à mouler thermoplastique selon l'une des revendications 1 à 10 ou de l'adhésif thermofusible selon l'une des revendications 11 à 13 pour l'assemblage ou la fixation de substrats.

16. Utilisation de la masse à mouler thermoplastique ou de l'adhésif thermofusible selon la revendication 15, dans laquelle l'assemblage consiste en une fixation de matériaux de remplissage ou de matériaux granulaires ou pulvérulents sur des substrats structurés ou textiles.

Figur 1

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5026756 A
- EP 0442045 A2
- EP 1631641 A
- EP 1645608 A
- US 5401792 A
- EP 2081609 A
- EP 1290100 A
- EP 2976403 A
- EP 3271436 A
- WO 2014047317 A
- EP 3271436 A1
- EP 0384264 A
- EP 0571882 A
- EP 0632063 A